# EUROPEAN PATENT APPLICATION

(11) **EP 3 940 521 A1**
(43) Date of publication of application: **19.01.2022**
(21) Application number: 21184124.2
(22) Date of filing: 06.07.2021
(51) Int. Cl.: G06F 3/0482, G06F 3/0483, G06F 3/0484, B60K 35/00, B60K 37/06

(54) **SMART TAB INTERFACE CONTROLS**

(30) Priority: 17.07.2020 IN 202011030521; 02.09.2020 US 202017009970
(71) Applicant: Honeywell International Inc., Charlotte, NC 28202 (US)
(72) Inventor: WYATT, Ivan, Charlotte, 28202 (US); GANNON, Aaron, Charlotte, 28202 (US); CROUCH, Steven, Charlotte, 28202 (US); PARTHASARATHY, Sudarshan, Charlotte, 28202 (US)
(74) Representative: LKGlobal UK Ltd.

(57) **Abstract**

A method of displaying information is provided. The method comprises: displaying, on a GUI page that displays a primary function, a plurality of top-level graphical control elements in a row on the GUI page; displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; receiving data entry for affecting the state of a system parameter via a graphical control element while simultaneously providing access to one or more unselected graphical control elements; and transferring the entered data value to appropriate equipment on the vehicle for implementation. The display size of the top-level and second-level graphical control elements allows the display device to continue to display the primary function.

## Description

### CROSS REFERENCE TO RELATED APPLICATION

This application claims priority to Indian Provisional Patent Application No. 202011030521, filed July 17, 2020, the entire content of which is incorporated by reference herein.

### TECHNICAL FIELD

Embodiments of the subject matter described herein relate generally to data entry systems. More particularly, embodiments of the subject matter relate to systems and methods to organize information and input fields.

### BACKGROUND

Many software applications that use TABs to organize information and input fields. The TABs are a software analog of physical file folders stacked in a file cabinet. TABs can use a lot of display real estate to allow a user to navigate from page to page until a page is reached on which data is input.

Hence, it is desirable to provide a TAB system that does not use a lot of display real estate. Furthermore, other desirable features and characteristics of the present invention will become apparent from the subsequent detailed description and the appended claims, taken in conjunction with the accompanying drawings and the foregoing technical field and background.

### SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

A system for controlling vehicle operations using a graphical user interface (GUI) displayed on a display device on a vehicle is provided. The system includes a controller configured to: cause to be displayed, on a GUI page that displays a primary function, a plurality of top-level graphical control elements in a row on the GUI page, wherein each top-level graphical control element provides a shortcut to one of a plurality of critical or frequently used vehicle systems accessible via the GUI; cause to be displayed, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; cause to be displayed, on the GUI page responsive to selection of a second-level graphical control element, one or more third-level graphical control elements adj acent to the selected second-level graphical control element and an outline that encompasses the selected second-level graphical control element and the one or more third-level graphical control elements; receive a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transfer the entered data value to appropriate equipment (e.g., avionics system) on the vehicle for implementation. The display size of the top-level graphical control elements, the second-level graphical control elements, and/or third-level graphical control elements allows the display device to continue to display the primary function.

A method of displaying information using a graphical user interface (GUI) is provided. The method includes: displaying, on a GUI page that displays a primary function, a plurality of top-level graphical control elements in a row on the GUI page, wherein each top-level graphical control element provides a shortcut to one of a plurality of critical or frequently used vehicle systems accessible via the GUI; displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; displaying, on the GUI page responsive to selection of a second-level graphical control element, one or more third-level graphical control elements adjacent to the selected second-level graphical control element and an outline that encompasses the selected second-level graphical control element and the one or more third-level graphical control elements; receiving a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transferring the entered data value to appropriate equipment (e.g., avionics system) on the vehicle for implementation. The display size of the top-level graphical control elements, the second-level graphical control elements, and/or third-level graphical control elements allows the display device to continue to display the primary function.

Non-transitory computer readable media encoded with programming instructions configurable to cause a controller to perform a method is provided. The method includes: displaying, on a GUI page that displays a primary function, a plurality of top-level graphical control elements in a row on the GUI page, wherein each top-level graphical control element provides a shortcut to one of a plurality of critical or frequently used vehicle systems accessible via the GUI; displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; displaying, on the GUI page responsive to selection of a second-level graphical control element, one or more third-level graphical control elements adjacent to the selected second-level graphical control element and an outline that encompasses the selected second-level graphical control element and the one or more third-level graphical control elements; receiving a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transferring the entered data value to appropriate equipment (*e.g*., avionics system) on the vehicle for implementation. The display size of the top-level graphical control elements, the second-level graphical control elements, and/or third-level graphical control elements allows the display device to continue to display the primary function.

Furthermore, other desirable features and characteristics will become apparent from the subsequent detailed description and the appended claims, taken in conjunction with the accompanying drawings and the preceding background.

### BRIEF DESCRIPTION OF THE DRAWINGS

Embodiments of the subject matter will hereinafter be described in conjunction with the following drawing figures, wherein like numerals denote like elements, and wherein:

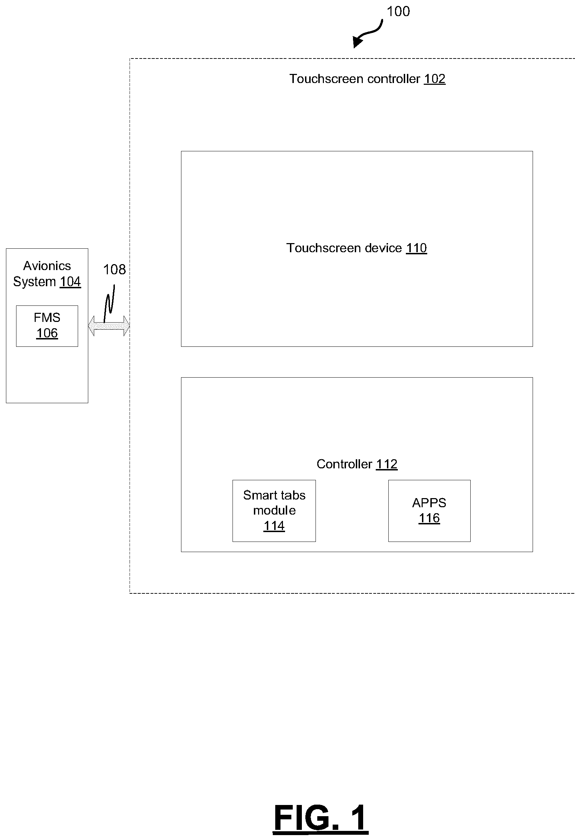

FIG. 1 is a block diagram depicting an example system for use by personnel in a vehicle, such as an aircraft, to enter operational information during a mission, in accordance with some embodiments;

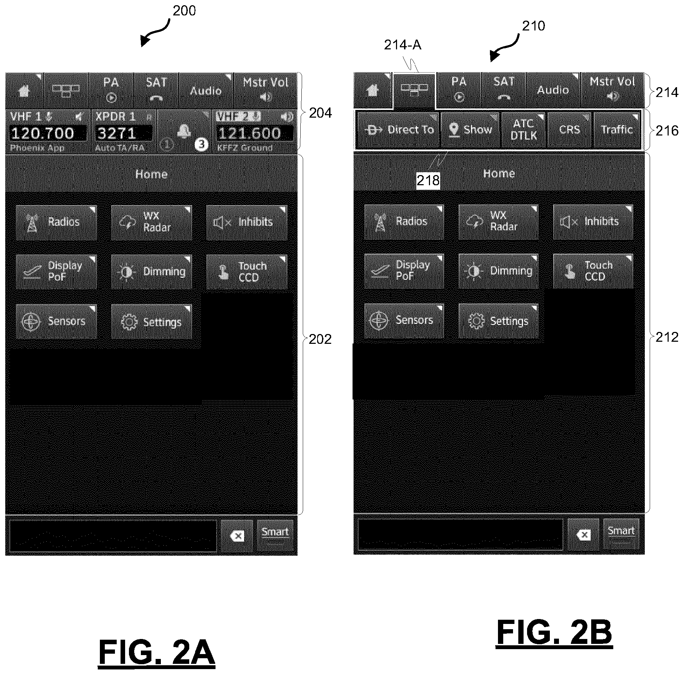

FIG. 2A is a diagram depicting the display of an example GUI page that includes the display of graphical elements generated by one or more APPS as well as a plurality of top-level graphical control elements that are displayed on the top of the GUI page, in accordance with some embodiments;
FIG. 2B is a diagram depicting the display of an example GUI page that includes the display of graphical elements generated by the one or more APPS as well as a plurality of top-level graphical control elements and second-level graphical control elements that are displayed on the top of the GUI page, in accordance with some embodiments;

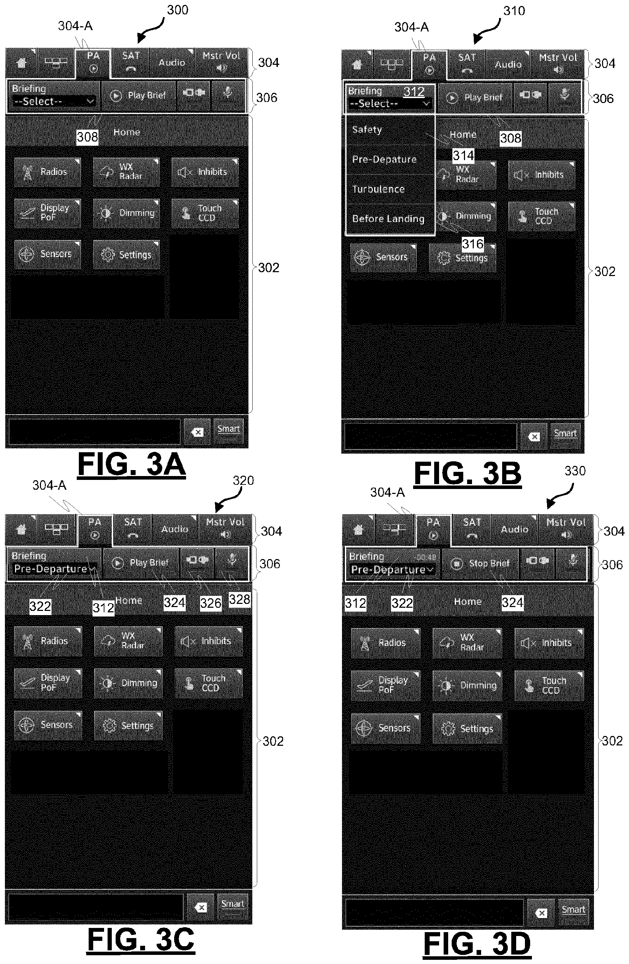

FIGS. 3A-3D are diagrams depicting the display of example GUI pages that illustrate various control and data entry functions that can be performed using graphical control elements while reserving much of display area for the graphical elements generated by the one or more APPS, in accordance with some embodiments;

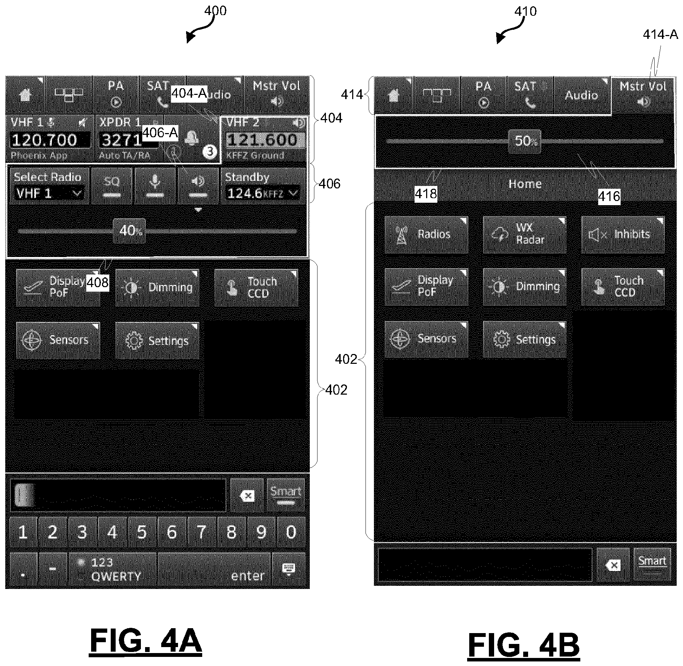

FIGS. 4A-4B are diagrams depicting the display of example GUI pages that illustrate various control and data entry functions that can be performed using graphical control elements while reserving much of display area for the graphical elements generated by the one or more APPS, in accordance with some embodiments; and

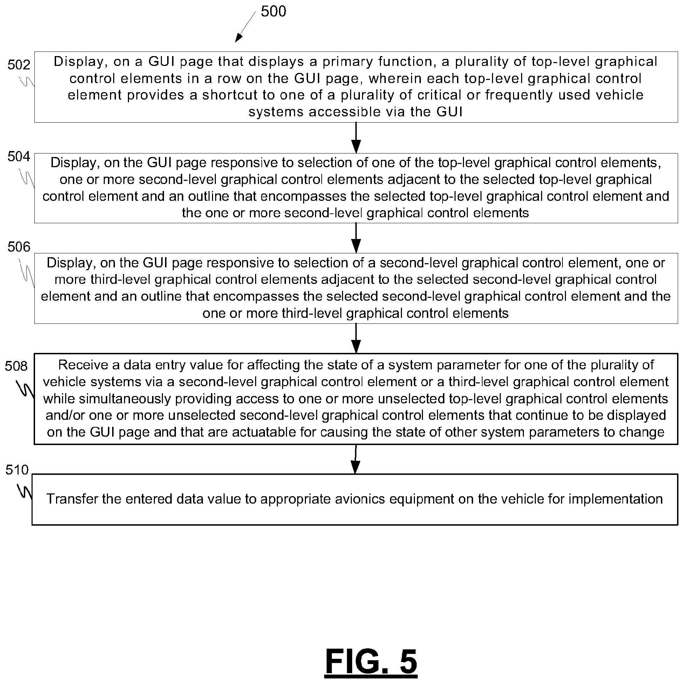

FIG. 5 is a process flow chart depicting an example process for controlling vehicle operations using a display device (*e.g*., touchscreen or non-touchscreen device) on a vehicle *(e.g.,* aircraft), in accordance with some embodiments.

### DETAILED DESCRIPTION

The following detailed description is merely exemplary in nature and is not intended to limit the application and uses. Furthermore, there is no intention to be bound by any expressed or implied theory presented in the preceding technical field, background, summary, or the following detailed description. As used herein, the term "module" refers to any hardware, software, firmware, electronic control component, processing logic, and/or processor device, individually or in any combination, including without limitation: application specific integrated circuit (ASIC), a field-programmable gate-array (FPGA), an electronic circuit, a processor (shared, dedicated, or group) and memory that executes one or more software or firmware programs, a combinational logic circuit, and/or other suitable components that provide the described functionality.

Embodiments of the present disclosure may be described herein in terms of functional and/or logical block components and various processing steps. It should be appreciated that such block components may be realized by any number of hardware, software, and/or firmware components configured to perform the specified functions. For example, an embodiment of the present disclosure may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments of the present disclosure may be practiced in conjunction with any number of systems, and that the systems described herein is merely exemplary embodiments of the present disclosure.

For the sake of brevity, conventional techniques related to signal processing, data transmission, signaling, control, and other functional aspects of the systems (and the individual operating components of the systems) may not be described in detail herein. Furthermore, the connecting lines shown in the various figures contained herein are intended to represent example functional relationships and/or physical couplings between the various elements. It should be noted that many alternative or additional functional relationships or physical connections may be present in an embodiment of the present disclosure.

The subject matter described herein discloses apparatus, systems, techniques and articles for implementing "Smart TABs" that utilize space dedicated for navigation for data entry, thus producing a more efficient, effective human interface. The apparatus, systems, techniques and articles provided herein can use display space traditionally allocated singularly to receive user input and multiply their utility by revealing relevant secondary functions and for navigation within a touchscreen controller.

The subject matter described herein discloses apparatus, systems, techniques and articles that are unique in that it combines tabbing navigation structures with an input field. This can reduce flight crew workload and lessen the burdens from task interruptions. The apparatus, systems, techniques and articles provided herein can make more efficient use of the display area and can increase information density while NOT increasing perceived clutter

FIG. 1 is a block diagram depicting an example system 100 for use by personnel in a vehicle, such as an aircraft, to enter operational information during a mission. The vehicle in this example is an aircraft and the example system 100 is an aircraft system. The example aircraft system 100 includes a touchscreen system 102 coupled to avionics systems 104 in the aircraft. The avionics systems 104 may include a variety of flight deck systems 106 such as a flight management system (FMS), a flight director (FD) system, a communication management function (CMF), a maintenance system, communication /navigation systems, radio systems, central maintenance computers (CMCs), forward display control systems, and other avionics systems utilized to open and interact with navigational charts, to list but a few examples.

The example touchscreen system 102 is configured with an avionics interface 108 to communicate with the avionics systems 106. The example touchscreen system 102 includes a touchscreen device 110 and a touchscreen controller (TSC) 112. The example touchscreen device 110 includes a touchscreen surface layered over a visual display. The touchscreen surface is configured to receive user input through single-touch or multi-touch gestures. The visual display is configured to display a graphical user interface (GUI) generated by the controller 112 during the execution of an application program. The GUI may provide one or more widgets for display that may allow for displaying, entering and/or editing data.

The example TSC 112 includes at least one processor and a computer-readable storage device or media. The processor may be any custom-made or commercially available processor, a central processing unit (CPU), a graphics processing unit (GPU), an application specific integrated circuit (ASIC), a field programmable gate array (FPGA), an auxiliary processor among several processors associated with the TSC 112, a semiconductor-based microprocessor (in the form of a microchip or chip set), any combination thereof, or generally any device for executing instructions. The computer readable storage device or media may include volatile and nonvolatile storage in read-only memory (ROM), random-access memory (RAM), and keep-alive memory (KAM), for example. KAM is a persistent or non-volatile memory that may be used to store various operating variables while the processor is powered down. The computer-readable storage device or media may be implemented using any of a number of known memory devices such as PROMs (programmable read-only memory), EPROMs (electrically PROM), EEPROMs (electrically erasable PROM), flash memory, or any other electric, magnetic, optical, or combination memory devices capable of storing data, some of which represent executable instructions, used by the controller 112.

The processors and memory of the example TSC 112 are configured by the executable programming instructions to provide, among other things, a smart tabs module 114 for generating graphical control elements (e.g., smart TABs) and one or more applications programs (APPs) 116. The example APPS 116 when executing may cause the generation of display screens *(e.g.,* GUI screens) containing widgets and other graphical elements on the display of the touchscreen device 110. The widgets and other graphical elements on the display screens provide the primary function for display via the GUI and the graphical control elements can supplement the display.

The example smart tabs module 114 is configured to generate a plurality of graphical control elements that appear in a tabular format as a tab on a GUI page displayed on the display of the touchscreen device 110. The graphical control elements generated by the smart tabs module 114 have a hierarchical relationship to other graphical control elements generated by the smart tabs module 114. In one example, the generated graphical control elements include a plurality of top-level graphical control elements, a plurality of second-level graphical control elements, and a plurality of third-level graphical control elements. Each third-level graphical control element is related hierarchically to a second-level graphical control element, and each second-level graphical control element is related hierarchically to a top-level graphical control element. In other examples, the generated graphical control elements may include additional hierarchical levels.

Each top-level graphical control element is related to a different system in the vehicle. Example systems illustrated include a PA system (public address system), a SAT phone system (satellite phone system), an audio system, a volume control system, various radio systems, and others. Each top-level graphical control element is configured to exercise some control over the state of one or more system parameters for its related system. The top-level graphical control elements may take the form of a radio button graphical control element. Some of the top-level graphical control element are also configured to provide a system parameter indicator that identifies the state of a parameter for its related system. Each top-level graphical control element is actuatable to cause one or more second-level graphical control element to be displayed and made available for actuation on the GUI page displayed on the display of the touchscreen device 110. In this example, the top-level graphical control elements are displayed in one of two rows on the top of the GUI page. In this example, the display size of the top-level graphical control elements allows at least 80 percent of the display area of the display device to continue to display the primary function.

Each second-level graphical control element is related to a different subsystem of the system with which its top-level graphical control element is related, is configured to display the state of a parameter related to the system with which its top-level graphical control element is related, is configured to change the state of a parameter related to the system with which its top-level graphical control element is related, is configured to exercise some control over the state of one or more system parameters for its related system, and/or is actuatable to cause one or more third-level graphical control element to be displayed and made available for actuation on the GUI page. The second-level graphical control elements may take the form of a radio button graphical control element, a check box button graphical control element, a split button graphical control element, a drop down list, a slider graphical control element, a text entry graphical control element and/or an on/off button graphical control element, among others. In this example, the second-level graphical control elements are displayed, upon selection/actuation of their related top-level graphical control element, in one or two rows underneath their related top-level graphical control element near the top of the GUI page. This allows for compact display of the second-level graphical control elements without significantly reducing the display area for displaying the primary function on the GUI page. In some examples, the display size of the second-level graphical control elements along with top-level graphical control elements does not reduce the display area for display of the primary function and continues to allow at least 80 percent of the display area of the display device to continue to display the primary function. In some examples, the display size of the second-level graphical control elements along with top-level graphical control elements does not significantly reduce the display area for display of the primary function and continues to allow at least 70 percent of the display area of the display device to continue to display the primary function.

The third-level graphical control elements are configured to display the state of a parameter related to the subsystem with which its second-level graphical control element is related, is configured to change the state of a parameter related to the subsystem with which its second-level graphical control element is related, and/or is configured to exercise some control over the state of one or more system parameters for its related system. The third-level graphical control elements may take the form of a drop down list, a slider graphical control element, a text entry graphical control element and/or an on/off button graphical control element, among others. In this example, the third-level graphical control elements are displayed, upon selection/actuation of their related second-level graphical control element, underneath their related second-level graphical control element near the top of the GUI page. This allows for compact display of the third-level graphical control elements without significantly reducing the display area for displaying the primary function on the GUI page. In some examples, the display size of the third-level graphical control elements along with second-level and top-level graphical control elements does not reduce the display area for display of the primary function and continues to allow at least 80 percent of the display area of the display device to continue to display the primary function. In some examples, the display size of the third-level graphical control elements along with second and top-level graphical control elements does not significantly reduce the display area for display of the primary function and continues to allow at least 50 percent of the display area of the display device to continue to display the primary function.

Top-level graphical control elements identify a system whose state can be controlled via selection/actuation of the top-level graphical control element. Second-level and third-level graphical control elements can display data regarding the current state of a selected system and/or provide data entry options for changing the state of the selected system. The data entry options may be provided via a checkbox graphic, a split button graphic, a drop down menu graphic, a slider graphic, a text entry graphic, and/or an on/off button graphic.

In these examples, when a top-level graphical control element is selected, its one or more related second-level graphical control elements are displayed beneath the selected top-level graphical control element. Also, an outline is provided that encompasses the selected top-level graphical control element and the one or more related second-level graphical control elements.

In these examples, when a second-level graphical control element that has one or more related third-level graphical control elements is selected, its one or more related third-level graphical control elements are displayed beneath the selected second-level graphical control element. Also, an outline is provided that encompasses the selected second-level graphical control element and the one or more related third-level graphical control elements.

The example smart tabs module 114 is configured cause the generated graphical control elements to be displayed on the display of the touchscreen device 110 without consuming all of the display area of the display. Although the foregoing example describes the smart tabs module 114 in the context of a touchscreen controller system, the smart tabs module 114 can be used with a display system that does not use a touchscreen display device. The smart tabs module 114 can cause the generated graphical control elements to be displayed on the display of a display device without consuming all of the display area of the display.

FIG. 2A is a diagram depicting the display of an example GUI page 200 that includes the display of graphical elements 202 generated by one or more APPS 116 as well as a plurality of top-level graphical control elements 204 that are displayed on the top of the GUI page 200.

FIG. 2B is a diagram depicting the display of an example GUI page 210 that includes the display of graphical elements 212 generated by the one or more APPS 116 as well as a plurality of top-level graphical control elements 214 and second-level graphical control elements 216 that are displayed on the top of the GUI page 210. The second-level graphical control elements 216 are related hierarchically to top-level graphical control element 214-A and are one level down in the hierarchy from top-level graphical control element 214-A. In the example GUI page 210, a top-level graphical control element 214-A has been selected. Responsive to selection of the top-level graphical control element 214-A, the example smart tabs module 114 has generated and caused to be displayed the plurality of second-level graphical control elements 216 in a row below the selected top-level graphical control element 214-A and an outline 218 that encompasses the selected top-level graphical control element 214-A and the plurality of second-level graphical control elements 216. The second-level graphical control elements 216 have been displayed instead of some of the top-level graphical control elements (such as top-level graphical control elements 204 displayed in the second row in GUI page 200) thereby conserving display area for the graphical elements 212 generated by the one or more APPS 116.

FIGS. 3A-3D are diagrams depicting the display of example GUI pages that illustrate various control and data entry functions that can be performed using graphical control elements while reserving much of display area for the graphical elements 302 generated by the one or more APPS 116. FIG. 3A is a diagram depicting the display of an example GUI page 300 that includes the display of graphical elements 302 generated by the one or more APPS 116 as well as a plurality of top-level graphical control elements 304 and second-level graphical control elements 306 that are displayed on the top of the GUI page 300. The second-level graphical control elements 306 are related to top-level graphical control element 304-A and are one level down in the hierarchy from top-level graphical control element 304-A. In the example GUI page 300, a top-level graphical control element 304-A has been selected. Responsive to selection of the top-level graphical control element 304-A, the example smart tabs module 114 has generated and caused to be displayed the plurality of second-level graphical control elements 306 in a row below the selected top-level graphical control element 304-A and an outline 308 that encompasses the selected top-level graphical control element 304-A and the plurality of second-level graphical control elements 306. The second-level graphical control elements 306 have been displayed instead of some of the top-level graphical control elements (e.g., top-level graphical control elements 204 displayed in the second row in GUI page 200) thereby conserving display area for the graphical elements 302 generated by the one or more APPS 116.

FIG. 3B is a diagram depicting the display of the example GUI page after selection of a second-level graphical control element 312. In the example display 310 of the GUI page, a second-level graphical control element 312 has been selected, and responsive to the selection, the example smart tabs module 114 has generated and caused to be displayed a third-level graphical control element 314 (in the form of a drop down menu) with a plurality of selectable parameter state choices in a column below the selected second-level graphical control element 312 and an outline 316 that encompasses the selected second-level graphical control element 312 and the third-level graphical control element 314.

Selection of one of the selectable parameter state choices results in the removal of the third-level graphical control element 314 *(e.g.,* drop down menu) and entry of the selected parameter state choice in the data entry portion 322 of the second-level graphical control element 312, as illustrated in FIG. 3C. FIG. 3C is a diagram depicting the display of the example GUI page 330 after selection of selectable parameter state from the third-level graphical control element 314. Also, depicted are a plurality of second-level graphical control elements 324, 326, 328 that, when selected, cause the performance of some function with the aircraft system (e.g., PA system). In this example, selection of a second-level graphical element 324 will cause the PA system to play the item (e.g., pre-departure briefing) selected via the third-level graphical control element 314 and identified in the data entry portion 322 of the second-level graphical control element 312.

FIG. 3D is a diagram depicting the display of the example GUI page 340 after selection of the second-level graphical control element 324 to play the item (e.g., pre-departure briefing) selected via the third-level graphical control element 314 and identified in the data entry portion 322 of the second-level graphical control element 312. In this example, the second-level graphical control element 324 is an on/off graphical control element that controls the PA system to play or stop playback, and has an identifier that identifies the state of a play parameter for the PA system if selected. Also, an indicator 326 in the first-level graphical control element 304-A can change state *(e.g.,* to the color green) to indicate the state of the system (*e.g*., PA system). In this example, because the PA system has been put in a play state by actuation of the second-level graphical control element 324, the indicator 326 in the first-level graphical control element 304-A has changed state *(e.g.,* to the color green) to indicate that the PA system is active.

In these examples, the second-level graphical control elements 306 have been displayed instead of some of the top-level graphical control elements (e.g., top-level graphical control elements 204 displayed in the second row in GUI page 200) thereby conserving display area for the graphical elements 302 generated by the one or more APPS 116.

FIGS. 4A-4B are diagrams depicting the display of example GUI pages that illustrate various control and data entry functions that can be performed using graphical control elements while reserving much of display area for the graphical elements 402 generated by the one or more APPS 116. FIG. 4A is a diagram depicting the display of an example GUI page 400 that includes the display of graphical elements 402 generated by one or more APPS 114 as well as a plurality of top-level graphical control elements 404 and second-level graphical control elements 406 that are displayed on the top of the GUI page 400. In the example GUI page 400, a top-level graphical control element 404-A has been selected. Responsive to selection of the top-level graphical control element 404-A, the example smart tabs module 114 has generated and caused to be displayed the plurality of second-level graphical control elements 406 in a row below the selected top-level graphical control element 404-A and an outline 408 that encompasses the selected top-level graphical control element 404-A and the plurality of second-level graphical control elements 406. Responsive to the selection of a second-level graphical control elements 406-A, a third-level graphical control element 410 (in the form of a slider) has been displayed and the outline 408 has been expanded to encompass the third-level graphical control element 410 in addition to the selected top-level graphical control element 404-A and the plurality of second-level graphical control elements 406. The third-level graphical control element 410 (in the form of a slider) can be used to change the state of a system parameter.

FIG. 4B is a diagram depicting the display of an example GUI page 410 that includes the display of graphical elements 402 generated by one or more APPS 114 as well as a plurality of top-level graphical control elements 414 and a single second-level graphical control element 416 that are displayed on the top of the GUI page 410. Responsive to the selection of a top-level graphical control elements 414-A, displayed are the second-level graphical control element 416 (in the form of a slider) and an outline 418 that encompasses the top-level graphical control element 414-A and the second-level graphical control element 416. The second-level graphical control element 416 (in the form of a slider) can be used to change the state of a system parameter.

In each of these examples, the display of the top-level graphical control elements, the second-level graphical control elements, and/or third-level graphical control elements occupies a minimal amount of the GUI page *(e.g.,* less than half) to allow the display device to continue to display the graphical elements generated by other elements (e.g., APPs 114) such as a potentially dynamically changing function.

FIG. 5 is a process flow chart depicting an example process 500 for controlling vehicle operations using a display device (*e.g*., touchscreen or non-touchscreen device) on a vehicle (*e.g.,* aircraft). The order of operation within the process 500 is not limited to the sequential execution as illustrated in the figure, but may be performed in one or more varying orders as applicable and in accordance with the present disclosure.

The example process 500 includes displaying, on a GUI page that displays a primary function, a plurality of top-level graphical control elements in a row on the GUI page, wherein each top-level graphical control element provides a shortcut to one of a plurality of critical or frequently used vehicle systems accessible via the GUI (operation 502).

The example process 500 includes displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements (operation 504).

The example process 500 includes displaying, on the GUI page responsive to selection of a second-level graphical control element, one or more third-level graphical control elements adjacent to the selected second-level graphical control element and an outline that encompasses the selected second-level graphical control element and the one or more third-level graphical control elements (operation 506).

The example process 500 includes receiving a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change (operation 508).

The example process 500 includes transferring the entered data value to appropriate equipment (*e.g*., avionics system) on the vehicle for implementation (operation 510). The display of the top-level graphical control elements, the second-level graphical control elements, and/or third-level graphical control elements allows the display device to continue to display the primary function.

Described herein are apparatus, systems, techniques and articles for implementing "Smart TABs" that utilize space dedicated for navigation for data entry, thus producing a more efficient, effective human interface. The apparatus, systems, techniques and articles provided herein can use display space traditionally allocated singularly to receive user input and multiply their utility by revealing relevant secondary functions and for navigation within a touchscreen controller.

In one embodiment, a system for controlling vehicle operations using a graphical user interface (GUI) displayed on a display device on a vehicle is provided. The system comprises a controller configured to: cause to be displayed. on a GUI page that displays a primary function, a plurality of top-level graphical control elements in a row on the GUI page, wherein each top-level graphical control element provides a shortcut to one of a plurality of critical or frequently used vehicle systems accessible via the GUI; cause to be displayed, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; cause to be displayed, on the GUI page responsive to selection of a second-level graphical control element, one or more third-level graphical control elements adjacent to the selected second-level graphical control element and an outline that encompasses the selected second-level graphical control element and the one or more third-level graphical control elements; receive a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transfer the entered data value to appropriate equipment (e.g., avionics system) on the vehicle for implementation. The display size of the top-level graphical control elements, the second-level graphical control elements, and/or third-level graphical control elements allows the display device to continue to display the primary function.

These aspects and other embodiments may include one or more of the following features. The display size of the top-level graphical control elements allows at least 80 percent of the display area of the display device to continue to display the primary function. The display size of the top-level graphical control elements and second-level graphical control elements allows at least 70 percent of the display area of the display device to continue to display the primary function. The display size of the top-level graphical control elements, second-level graphical control elements, and/or third-level graphical control elements allows at least 50 percent of the display area of the display device to continue to display the primary function. Data entry may be received via a checkbox graphic, a split button graphic, a drop down menu graphic, a slider graphic, a text entry graphic, or an on/off button graphic. The second-level graphical control elements may be displayed, upon selection of their related top-level graphical control element, in one or two rows underneath their related top-level graphical control element near the top of the GUI page. The third-level graphical control elements may be displayed, upon selection of their related second-level graphical control element, underneath their related second-level graphical control element.

In another embodiment, a method of displaying information using a graphical user interface (GUI) is provided. The method comprises: displaying, on a GUI page that displays a primary function, a plurality of top-level graphical control elements in a row on the GUI page, wherein each top-level graphical control element provides a shortcut to one of a plurality of critical or frequently used vehicle systems accessible via the GUI; displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; displaying, on the GUI page responsive to selection of a second-level graphical control element, one or more third-level graphical control elements adj acent to the selected second-level graphical control element and an outline that encompasses the selected second-level graphical control element and the one or more third-level graphical control elements; receiving a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transferring the entered data value to appropriate equipment (e.g., avionics system) on the vehicle for implementation. The display size of the top-level graphical control elements, the second-level graphical control elements, and/or third-level graphical control elements allows the display device to continue to display the primary function.

These aspects and other embodiments may include one or more of the following features. The display size of the top-level graphical control elements allows at least 80 percent of the display area of the display device to continue to display the primary function. The display size of the top-level graphical control elements and second-level graphical control elements allows at least 70 percent of the display area of the display device to continue to display the primary function. The display size of the top-level graphical control elements, second-level graphical control elements, and/or third-level graphical control elements allows at least 50 percent of the display area of the display device to continue to display the primary function. Data entry may be received via a checkbox graphic, a split button graphic, a drop down menu graphic, a slider graphic, a text entry graphic, or an on/off button graphic. The second-level graphical control elements may be displayed, upon selection of their related top-level graphical control element, in one or two rows underneath their related top-level graphical control element near the top of the GUI page. The third-level graphical control elements may be displayed, upon selection of their related second-level graphical control element, underneath their related second-level graphical control element.

In another embodiment, non-transitory computer readable media encoded with programming instructions configurable to cause a controller to perform a method is provided. The method comprises: displaying, on a GUI page that displays a primary function, a plurality of top-level graphical control elements in a row on the GUI page, wherein each top-level graphical control element provides a shortcut to one of a plurality of critical or frequently used vehicle systems accessible via the GUI; displaying, on the GUI page responsive to selection of one of the top-level graphical control elements, one or more second-level graphical control elements adjacent to the selected top-level graphical control element and an outline that encompasses the selected top-level graphical control element and the one or more second-level graphical control elements; displaying, on the GUI page responsive to selection of a second-level graphical control element, one or more third-level graphical control elements adjacent to the selected second-level graphical control element and an outline that encompasses the selected second-level graphical control element and the one or more third-level graphical control elements; receiving a data entry value for affecting the state of a system parameter for one of the plurality of vehicle systems via a second-level graphical control element or a third-level graphical control element while simultaneously providing access to one or more unselected top-level graphical control elements and/or one or more unselected second-level graphical control elements that continue to be displayed on the GUI page and that are actuatable for causing the state of other system parameters to change; and transferring the entered data value to appropriate equipment (*e.g*., avionics system) on the vehicle for implementation. The display size of the top-level graphical control elements, the second-level graphical control elements, and/or third-level graphical control elements allows the display device to continue to display the primary function.

These aspects and other embodiments may include one or more of the following features. The display size of the top-level graphical control elements allows at least 80 percent of the display area of the display device to continue to display the primary function. The display size of the top-level graphical control elements and second-level graphical control elements allows at least 70 percent of the display area of the display device to continue to display the primary function. The display size of the top-level graphical control elements, second-level graphical control elements, and/or third-level graphical control elements allows at least 50 percent of the display area of the display device to continue to display the primary function. Data entry may be received via a checkbox graphic, a split button graphic, a drop down menu graphic, a slider graphic, a text entry graphic, or an on/off button graphic. The second-level graphical control elements may be displayed, upon selection of their related top-level graphical control element, in one or two rows underneath their related top-level graphical control element near the top of the GUI page. The third-level graphical control elements may be displayed, upon selection of their related second-level graphical control element, underneath their related second-level graphical control element.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A system for controlling vehicle operations using a graphical user interface (GUI) displayed on a display device on a vehicle, the system comprising a controller configured to:
cause to be displayed, on a GUI page that displays a primary function, a plurality of top-level tabular control elements in a row on the GUI page, wherein each top-level tabular control element provides a shortcut to one of a plurality of critical or frequently used vehicle systems accessible via the GUI;
cause to be displayed, on the GUI page responsive to selection of one of the top-level tabular control elements, one or more second-level tabular control elements adjacent to the selected top-level tabular control element and a first outline that encompasses the selected top-level tabular control element and the one or more second-level tabular control elements, wherein the first outline is highlighted with respect to the tabular elements it encompasses;
cause to be displayed, on the GUI page responsive to selection of a second-level tabular control element, one or more graphical control elements adjacent to the selected second-level tabular control element and a second outline that encompasses the selected second-level tabular control element and the one or more third-level graphical control elements, wherein the second outline is highlighted with respect to the tabular and graphical elements it encompasses;
wherein upon selection of the second-level tabular control element, the first outline and the second outline are simultaneously displayed;
receive a data entry value for affecting the state of a system parameter for one of the plurality of vehicle systems via a second-level tabular control element or a third-level graphical control element while simultaneously providing access to one or more unselected top-level tabular control elements and one or more unselected second-level tabular control elements that continue to be displayed on the GUI page and that are actuatable for causing the state of other system parameters to change; and
transfer the entered data value to appropriate equipment on the vehicle for implementation;
wherein the display size of the top-level tabular control elements, the second-level tabular control elements, and the third-level graphical control elements allow the display device to continue to allow access to underlying functionality and display the primary function.

2. The system of claim 1, wherein the display size of the top-level tabular control elements allows at least 80 percent of the display area of the display device to continue to display the primary function.

3. The system of claim 1, wherein the display size of the top-level tabular control elements and second-level tabular control elements allows at least 70 percent of the display area of the display device to continue to display the primary function.

4. The system of claim 1, wherein the display size of the top-level tabular control elements, second-level tabular control elements, and third-level graphical control elements allows at least 50 percent of the display area of the display device to continue to display the primary function.

5. The system of claim 1, wherein data entry is received via a checkbox graphic, a split button graphic, a drop down menu graphic, a slider graphic, a text entry graphic, or an on/off button graphic.

6. The system of claim 1, wherein the second-level tabular control elements are displayed, upon selection of their related top-level tabular control element, in one or two rows underneath their related top-level tabular control element near the top of the GUI page.

7. The system of claim 1, wherein the third-level graphical control elements are displayed, upon selection of their related second-level tabular control element, underneath their related second-level tabular control element.

8. A method of displaying information using a graphical user interface (GUI), the method comprising:
displaying, on a GUI page that displays a primary function, a plurality of top-level tabular control elements in a row on the GUI page, wherein each top-level tabular control element provides a shortcut to one of a plurality of critical or frequently used vehicle systems accessible via the GUI;
displaying, on the GUI page responsive to selection of one of the top-level tabular control elements, one or more second-level tabular control elements adjacent to the selected top-level tabular control element and a first outline that encompasses the selected top-level tabular control element and the one or more second-level tabular control elements, wherein the first outline is highlighted with respect to the tabular elements it encompasses;
displaying, on the GUI page responsive to selection of a second-level tabular control element, one or more third-level graphical control elements adjacent to the selected second-level tabular control element and a second outline that encompasses the selected second-level tabular control element and the one or more third-level graphical control elements, wherein the second outline is highlighted with respect to the tabular and graphical elements it encompasses;
wherein upon selection of the second-level tabular control element, the first outline and the second outline are simultaneously displayed;
receiving a data entry value for affecting the state of a system parameter for one of the plurality of vehicle systems via a second-level tabular control element or a third-level graphical control element while simultaneously providing access to one or more unselected top-level tabular control elements and one or more unselected second-level tabular control elements that continue to be displayed on the GUI page and that are actuatable for causing the state of other system parameters to change; and
transferring the entered data value to appropriate equipment on the vehicle for implementation;
wherein the display size of the top-level tabular control elements, the second-level tabular control elements, and third-level graphical control elements allows the display device to continue to allow access to underlying functionality and display the primary function.

9. The method of claim 8, wherein the display size of the top-level tabular control elements allows at least 80 percent of the display area of the display device to continue to display the primary function.

10. The method of claim 8, wherein the display size of the top-level tabular control elements and second-level tabular control elements allows at least 70 percent of the display area of the display device to continue to display the primary function.

11. The method of claim 8, wherein the display size of the top-level tabular control elements, second-level tabular control elements, and third-level graphical control elements allows at least 50 percent of the display area of the display device to continue to display the primary function.

12. The method of claim 8, wherein the receiving a data entry value comprises receiving a data entry value via a checkbox graphic, a split button graphic, a drop down menu graphic, a slider graphic, a text entry graphic, or an on/off button graphic.

13. The method of claim 8, wherein the second-level tabular control elements are displayed, upon selection of their related top-level tabular control element, in one or two rows underneath their related top-level tabular control element near the top of the GUI page.

14. The method of claim 8, wherein the third-level graphical control elements are displayed, upon selection of their related second-level tabular control element, underneath their related second-level tabular control element.
